# EUROPEAN PATENT APPLICATION

(11) **EP 4 717 447 A1**
(43) Date of publication of application: **01.04.2026**
(21) Application number: 24203108.6
(22) Date of filing: 27.09.2024
(51) Int. Cl.: B29C 70/54, B29C 31/08, B25J 15/00, B25J 15/06, B29D 99/00, B29L 31/08

(54) **METHOD FOR LIFTING A PREFORM ELEMENT FOR A WIND TURBINE BLADE AND LIFTING DEVICE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

The invention relates to a method for lifting a preform element (1) for a wind turbine blade of a wind turbine, in particular from a transport and/or storage device for at least one preform element (1) to a blade mold (24), comprising
- providing a main lifting device (12) having first gripping means, in particular suction cups (4) connected to at least one pump, and second gripping means,
- attaching the first gripping means to an upper surface of the preform element (1),
- gripping flexible support sections (8) extending at opposing lateral sides (31) of the preform element (1) by the second gripping means, and
- lifting the gripped preform element (1) using the main lifting device (12).

## Description

The invention concerns a method and a lifting device for lifting a preform element for a wind turbine blade of a wind turbine, in particular from a transport and/or storage device for at least one preform element to a blade mold.

Wind turbines convert the mechanical energy of the wind into electrical energy and hence usually comprise a rotor having multiple wind turbine blades. Since large-scale energy production is sought, the wind turbines and, accordingly, the wind turbine blades have an enormous size, such that their manufacturing is a major challenge for manufacturers of wind turbines. For a long time, wind turbine blades have been fabricated from fiber-reinforced material involving the handling of large parts like fiber mats by casting the shell of the wind turbine blade. Meanwhile, technologies have been proposed to facilitate manufacturing of wind turbine blades.

In particular, it has been proposed to use preform elements, or preforms, respectively. Such preform elements are preformed smaller parts or segments of the wind turbine blade, which are used for building the respective wind turbine blade shell in a blade mold. The preform elements are prefabricated separately and then arranged and aligned in the blade mold according to the requested geometry of the wind turbine blade to be manufactured. The preform elements may be arranged in the blade mold for casting an entire wind turbine blade or a large wind turbine blade part, for example a root portion.

The preform elements may comprise one or more components, for example one or more textile layers, wherein the components are at least locally attached to each other by using a binding agent/adhesive agent. Such components may, for example, comprise a plurality of fiber mats and/or core materials, which are locally attached to each other to allow for their mutual handling. This facilitates the arrangement of the components in the blade mold. Preform elements may be understood as semi-solid elements. In particular, textile components of the preform elements, for example fiber mats, may consist of glass fibers, carbon fibers, or aramid fibers. These layers remain unaffected by the binding agent, such that they can be filled later on with a resin during the manufacturing of the rotor blade. Core material may, for example, comprise balsa wood, foam and the like. In many cases, the preform elements comprise multiple layers of material. Using preform elements in particular allows to reduce the cycle time for production of wind turbine blades.

Preform elements are usually fabricated in a manufacturing system, which may comprise a preform mold. Such a preform mold usually comprises a mold element, for example a mold shell, which comprises a molding surface shaped according to the desired shape of the preform element, whereon the components are placed to assume the corresponding shape. Often, the preform elements are covered in a vacuum bag to stabilize the stack of components that constitutes the preform element. These vacuum bags have to be removed before the preform element is used in a blade mold.

The preform element has to be transported from a preform mold station, where the preform mold is located, to a blade mold station, where the blade mold is located, and maybe even stored for some time at a storage location. Transport and/or storage devices, in particular transport and/or storage racks, are known, which provide one or more support structures onto which preform elements can be placed. Lifting devices are known to lift the preform elements from a preform mold to a transport and/or storage device or from a transport and/or storage device to a blade mold. In principle, lifting devices could also be used to move preform elements between molds and/or transport and/or storage devices.

Such lifting devices are often called lifting yokes, since they comprise a yoke-like carrying structure having gripping means mounted to it, wherein the gripping means can attach to the upper surface of preform elements to grip them, lift them and move them by using other degrees of freedom, for example provided by corresponding movement actuators of the carrying structure. An often-used technology for the gripping means is vacuum suction, wherein suction cups to be attached to the upper surface are connected to at least one pump operated to evacuate the interior of the suction cups, such that the preform elements can be gripped. Other related technologies include Bernoulli grippers and vortex grippers, which also act pneumatically.

Preform elements which have tapered end sections, in which their height continuously or gradually decreases towards their, in particular longitudinal, ends, have been proposed. The preform element hence becomes very thin in these tapered end sections, in particular such that they are not sufficiently air-tight to be gripped. Losing grip by the pneumatic grippers, in particular the vacuum cups, can lead to a chain reaction where a large part or the whole preform element is dropped. Like problems can occur if some layers or components of the preform element are not fully attached to each other over the length and/or width of the preform element.

Loss of grip of the known gripping means is most relevant when the preform element is to be placed in the blade mold in an exact predetermined orientation and position. Occurring forces, for example caused by rotation of the preform element, lead to an increased likelihood of losing grip, which in turn may result in damage to the preform element, if dropped onto the blade mold also damage in other components of the wind turbine blade and workflow disruption. Hence, to prevent such a scenario, the gripping means engaging at the upper surface of the preform element may be provided with higher gripping power, for example by increasing suction at the suction cups. However, this leads to a major increase in complexity, number of components, power demand and, as a consequence, cost.

It is an object of the present invention to provide an improved lifting method and device for lifting preform elements, in particular into a blade bold, which provide improved gripping for preform elements having weak spots regarding known gripping methods.

This object is achieved by proving a lifting method and device according to the independent claims. Advantageous embodiments are described by the dependent claims.

A method for lifting a preform element for a wind turbine blade of a wind turbine, in particular from a transport and/or storage device for at least one preform element to a blade mold, according to the invention comprises
- providing a main lifting device having first gripping means, in particular suction cups connected to at least one pump, and second gripping means,
- attaching the first gripping means to an upper surface of the preform element,
- gripping flexible support sections extending at opposing lateral sides of the preform element by the second gripping means, and
- lifting the gripped preform element using the main lifting device.

It is hence proposed to, at least in sections corresponding to the weak spots, use an additional gripping concept based on flexible support sections provided at least in these weak spot sections. The gripped support sections carry the preform element. The support sections may be provided by a component of the preform element, but also by a component external to the preform element, as further detailed below. Such a component is wider than the preform element itself, hence protrudes over its lateral edges, where it can be gripped by suitable second gripping means. In other words, the support sections extend over the lateral sides of the preform element. The preform element may be suspended on and between the gripped support sections, but is additionally held by the first gripping means, which attach to the upper surface of the preform element. That is, the second gripping means support the first gripping means in cases where the preform element has at least one weak spot regarding the first gripping means, but can be realized with less effort and cost. In particular, the second gripping means are not (or at least less) affected by the weak spot. Preferably, the component may be a fiber mat, in particular a glass fiber mat.

For example, if the first gripping means comprises at least one pump and suction cups in a suction arrangement, in particular for vacuum gripping/lifting, it is not required to add additional suction power, for example additional pumps, and/or to modify the arrangement of the suction cups.

Generally, the lifting device may comprise a carrying structure, in particular a yoke-like carrying structure, whereto the first and second gripping means are mounted. The lifting device may hence be a lifting yoke. For example, the carrying structure may comprise a frame to be placed above the preform element, such that the first gripping means, in particular its suction cups or generally its grippers, are mounted to cross-members of the frame or suspended from the frame, which may be arched to at least partly correspond to a curvature of the preform element. The crossmembers may be segmented to allow adjusting their shape to different curvatures. Additionally or alternatively, grippers of the first gripping means may be adjustable in position and orientation to conform to different shapes of the preform element. Furthermore, lateral longitudinal carrier elements may be attached to the frame or be part of the frame, spanning at least a part of the length of the frame. The second gripping means may be provided along at least a part of the length of each carrier element, which may be configured to be a part of the second gripping means. In particular, the carrier elements may be aligned with the lateral edges of the preform element where the flexible support sections jut out to grip them.

In embodiments, the preform element has, in particular at least in the longitudinal direction, tapered end sections, wherein the support sections are provided at least spanning the tapered end sections. The tapered end sections are an example for a weak spot regarding the first gripping means, since, in particular, the preform element may not be air-tight enough in the tapered end sections and/or tend to deform/wrinkle. Here, the support sections and the second gripping means allow a secure grip to the preform element.

In preferred embodiments, the main lifting device may comprise no first gripping means for at least a part of the tapered end sections and/or the first gripping means may be deactivated for at least the part of the tapered end sections. In other words, the carrying structure may comprises no first gripping means in at least one longitudinal end section for attaching to a tapered end section of the preform element and/or the first gripping means may be deactivated in such a longitudinal end section. Hence, the first gripping means can be left out or not be used where a weak spot regarding them is present, increasing efficiency of the main lifting device and the first gripping means. For example, no suction cups may be provided or used where the preform element is not sufficiently airtight. Hence, inefficient operation is prevented, since there is no air sucked by pumps through the preform element. Less pumps or pumping power lead to easier and simpler construction and less cost. Meanwhile, secure gripping is still achieved using the second gripping means. In particular, no first gripping means, but second gripping means may be provided or used where the height of the preform element is below a height limit or even for the whole tapered end sections.

In summary, the second gripping means using flexible support sections provide significant additional and/or replacement support, in particular in sections where the preform element is thin, for example has a thin laminate. This alleviates or eliminates difficulties in gripping the preform element, in particular due to reduced air-tightness, for example increased porosity. Additionally, components, for example of core material, which do not bond sufficiently to the other components of the preform element, can be supported. The method and lifting device also allow reliable gripping, lifting and moving where layers of the preform element, for example in overlap regions to other preform elements, are not attached to each other, for example by providing a separation mat in between the layers. The risk of a preform element being lost during handling due to weak spots regarding the first gripping means is significantly reduced. Regarding suction cups (vacuum cups) as first gripping means, the lifting method and device will significantly reduce the required suction (vacuum) pump capacity and thus make lifting and the lifting device easier and cheaper.

It should be noted that, in particular for a component of the preform element providing the flexible support section, a vacuum bag should have already been removed from the preform element.

As already indicated, the support sections could be provided, in a first option, by an additional, external component. Hence, in a first group of embodiments, the method further comprises, before applying the gripping means, positioning at least one flexible support mat below the preform element to be lifted, such that the support sections of the support mat stick out from both lateral sides. The support mat hence has a larger width than the preform element, such that it extends over its lateral sides after placement of the preform element. For example, the support mat(s) can first be positioned on a support structure for the preform element, for example in a transport and/or storage device, in particular rack, onto which the preform element will be moved from the preform mold. Thereafter, the preform element is lowered onto the support structure and onto the support mat(s), such that the support mat(s) extends below the preform element except for the support sections, which stand out laterally.

In a second group of embodiments of the first option, the method may comprise providing the preform element and at least one flexible support mat together in a vacuum bag, wherein the preform element is positioned on the at least one support mat such that the support sections of the support mat stick out from under the preform element on both lateral sides of the preform element. Hence, in this case, the support mat is already added before the preform element is enclosed in a vacuum bag, in particular in the preform mold. In this manner, the support mat can be easily transported and stored together with the preform element and is provided ready-to-use with the preform element. Furthermore, the support mat is also protected by the vacuum bag.

In preferred embodiments, the support mat may be a fiber mat, in particular a glass fiber mat. It is also conceivable that the support mat comprises another material usable in building wind turbine blade.

This allows, in preferred embodiments, that the support mat may be left in the blade mold to become a part of the wind turbine blade. In other words, there is no requirement to remove the support mat from under the preform element after positioning the preform element in the blade mold using the main lifting device. This simplifies handling and reduces the risk of wrinkles or other unwanted formations in materials in the blade mold. For example, the presence of the support mat may already be taken into account when designing the wind turbine blade. In this context, the support mat may be chosen to be thin, such that only a small amount of material is added.

In concrete examples of the first group of embodiments, the positioning comprises
- laying out the at least one support mat in the transport and/or storage device adjacent to a preform mold,
- lifting, by an auxiliary lifting device having or using only first gripping means, the preform element from the preform mold onto the at least one support mat on the transport and/or storage device.

Moving the preform element from the preform mold to the transport and/or storage device, in particular transport and/or storage rack, is an uncomplicated process regarding the movement path of the preform element and the accuracy regarding its positioning, such that the risk that the preform element drops from the auxiliary lifting device is significantly lower than during the process of moving the preform element into the blade mold. In particular, the movement of the preform element may be a simple parallel shift. Hence, second gripping means for this lifting and movement process are not required, as opposed to lifting the preform element into the blade mold, where the main lifting device is provided and, due to the positioning of the support mat, the support sections are readily available.

In concrete examples of the second group of embodiments, the providing may comprise
- providing, in a preform mold, a lower vacuum foil and the flexible support mat on top of the lower vacuum foil, wherein no binding agent is used on the support mat,
- manufacturing the preform element on the flexible support mat in the preform mold,
- folding the support sections of the support mat onto the preform element,
- closing the vacuum bag by providing an upper vacuum foil, and,
- when the preform element is to be lifted, removing the vacuum bag and folding the support sections back out from the upper surface of the preform element.

Advantageously, the addition of the flexible support mat is, in this second group of embodiments, already achieved when the preform element is manufactured in the preform mold. Here, the fact of using a vacuum bag is exploited, since the vacuum bag allows to hold the support mat and the preform element together. In the vacuum bag, the support mat can be provided together with the preform element in the correct position.

First, the lower or bottom vacuum foil is placed in the preform mold. Thereafter, the at least one lifting or support mat, which is wider than the preform element to be manufactured, is positioned without binder on it. The following steps are as usual for manufacturing the preform element, in particular using binder for at least some layers. Then, the flexible support mat, particularly its support sections, are flipped in over the preform element to be placed on its upper surface. Then, the whole arrangement is heat treated. When the preform element is removed from the vacuum bag, the support sections are flipped out again, ready to be gripped by the second gripping means.

In a second option, the support sections may at least partly be provided by at least one extended component mat of the preform element, which is wider than the preform element and hence protrudes from the preform element on both lateral sides. Such so-called extended mats as components of the preform element have already been proposed. Usually, the sections of the extended component mats sticking out from the preform element are, for transport and/or storage and/or when building the wind turbine blade in the blade mold, folded over the preform element. In the lifting method according to the invention, these sections are used as the flexible support sections gripped by the second gripping means to improve moving the preform element, in particular into the blade mold. There, the flexible support sections may, as in principle known, can be folded back over the preform element or remain smoothed out in their protruding position. In such embodiments, preferably, a feature available in at least some preform elements is used to better support the preform element, in particular when it has weak spots regarding the first gripping means. The flexible support sections of the extended component mat can already be used for moving the preform element out of the preform mold.

In preferred embodiments, gripping the support sections by the second gripping means may comprise
- flipping the support sections around a longitudinal carrier element of the second gripping means and placing at least a part of each support section in a respective receiving volume of the carrier element, and
- clamping the support section against at least one clamping surface using a clamping element of the second gripping means.

The support sections may hence be wrapped at least partly around the carrier element due to their flexibility such that at least part of the support section may be introduced into the respective receiving volume, which is preferably provided inside the carrier element and accessible via an opening. For example, the carrier element may have a U-shape, wherein the support section is guided along one of the legs of the U to the interior of the U where the clamping element may act. Of course, other configurations, where the receiving volume is provided along an outside of the carrier element are also conceivable. Generally, a construction which is easy to handle, yet effective in gripping, is provided. Flipping or wrapping the support section around the carrier element further improves the hold. In embodiments, the clamping surface and/or surfaces along which the support section is guided may be modified to provide higher friction and/or roughness to further improve clamping.

Preferably, the clamping process may be effected by at least one mechanical and/or hydraulic and/or pneumatic actuator of the second gripping means.

For example, in an especially preferred concrete embodiment, the hydraulic and/or pneumatic actuator comprises, as the clamping element, at least one expandable hose extending in longitudinal direction through the receiving volume, wherein the expandable hose is filled with at least one fluid to effect the clamping. The expandable hose may be one long piece, however, it is also possible that the expandable hose comprises multiple hose segments, which are connected sealingly. In other words, the expandable hose may comprise several smaller hoses lying in extension of each other. In a compact and easy to realize embodiment, the carrier element may have a U-shaped cross section open on the upper side, wherein the expandable hose runs through the interior of the U. If, now, the respective support section is flipped up from below the U to abut on the outer surface of the outer leg of the U and then introduced into the interior of the U, forming the receiving volume, the expandable hose can be filled with the fluid, for example and preferably air or water. The hose expands and presses the support section against at least one inner wall of the U serving as the clamping surface. The fluid may, for example, be supplied by a supply device connected to the expandable hose by a supply hose.

In another concrete embodiment, the carrier element may also comprise a U profile, wherein the interior of the U forms the receiving volume and an elastic clamping element having an extension larger than the width of the U is mechanically pressed into the receiving volume to effect the clamping.

In modern wind turbines, wind turbine blades of different geometries, in particular sizes, are employed. Hence, if different types/sizes of wind turbine blades are to be manufactured, the size of the preform elements varies in accordance with the blade dimensions they are intended to be used for. In particular, preform elements primarily vary in height and width, wherein, in addition, even in a certain type of wind turbine blade, different shapes may occur. To be able to use the main lifting device for differently sized and/or shaped preform elements, in preferred embodiments, the main lifting device comprises adaptation means for adapting the second gripping means to a width and/or a shape and/or a height of the preform element, wherein the method further comprises adapting the second gripping means to a width and/or a shape and/or a height of the preform element before gripping the support sections. In concrete embodiments, for example when using a carrying structure having a frame and longitudinal carrier elements of the second gripping means or comprised by the second gripping means, the carrier elements may be coupled to the frame by at least one vertical connection element and at least one horizontal connection element, whose effective lengths may be adjustable by the adaptation means. For example, at least one connection element may be telescopic and/or guided in a releasable mounting means such that it can be fastened in different effective lengths.

A lifting device for a preform element of a wind turbine blade according to the invention comprises
- a carrying structure having
   - first gripping means, in particular suction cups connected to at least one pump, for attaching to an upper surface of the preform element, and
   - second gripping means for gripping flexible support sections extending at opposing lateral sides of the preform element, which extend at least partly along lateral sides of the carrying structure; and
- a movement actuator for moving the carrying structure.

Such a lifting device may preferably be used as the main lifting device in a method according to the invention. All remarks and features regarding the method according to the invention can analogously be applied to the lifting device according to the invention and vice versa.

In particular, the movement actuator may be configured to move the carrying structure (and hence a preform element gripped by its gripping means) in all three dimensions to lift the preform element, move it to the blade mold, and lower it into the blade mold.

Preferably, the carrying structure comprises no first gripping means in at least one longitudinal end section for attaching to a tapered end section of the preform element. In particular, the carrying structure may have end sections where second gripping means are provided, but no first gripping means. In embodiments, second gripping means may be provided only in the end sections and only first gripping means may be provided in between.

Preferably, the second gripping means may comprise
- longitudinal carrier elements having a receiving volume for a support section, and
- a clamping element for clamping the support section against at least one clamping surface of the receiving volume.

As already mentioned above, in an especially preferred embodiment, the second gripping means further comprise a hydraulic and/or pneumatic actuator comprising, for each carrier element,
- as the clamping element, at least one expandable hose extending in longitudinal direction through the receiving volume, and
- a fluid source for filling the expandable hose with at least one fluid to effect the clamping.

The carrier element may preferably comprise a U-shaped cross section.

In an alternative, the second gripping means may also comprise a mechanical actuator. The carrier element may then comprise a U-profile, wherein the interior of the U forms the receiving volume and an elastic clamping element having an extension larger than the width of the U is mechanically pressed into the receiving volume to effect the clamping.

Preferably, the lifting device further comprises adaptation means for adapting the second gripping means to a width and/or a curvature and/or a height of the preform element.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a cross section of a tapered end section of a preform element,
- Fig. 2: a preform element lifted by an auxiliary lifting device,
- Fig. 3: laying out support mats in a support structure of a transport and/or storage rack,
- Fig. 4: placing a preform element onto the support mats and the support structure,
- Fig. 5: the preform element placed on the support mats and the support structure,
- Fig. 6: a preform element having an extended mat,
- Fig. 7: a first embodiment of a main lifting device and its positioning relative to support mats,
- Fig. 8: a second embodiment of a main lifting device and its positioning relative to support mats,
- Fig. 9: a third embodiment of a main lifting device and its positioning relative to support mats,
- Fig. 10: flipping a support section around a carrier element in an embodiment of second gripping means,
- Fig. 11: clamping the support section using a clamping element in the embodiment of Fig. 10,
- Fig. 12: lowering a preform element into a blade mold using the main lifting device,
- Fig. 13: the preform element lowered onto other materials in the blade mold,
- Fig. 14: removing the carrying structure of the main lifting device from the blade mold,
- Fig. 15: adaptation means of the main lifting device,
- Fig. 16: adding a flexible support mat in a preform mold, and
- Fig. 17: preparing an arrangement of a preform element and a support mat in a preform mold for vacuum packing.

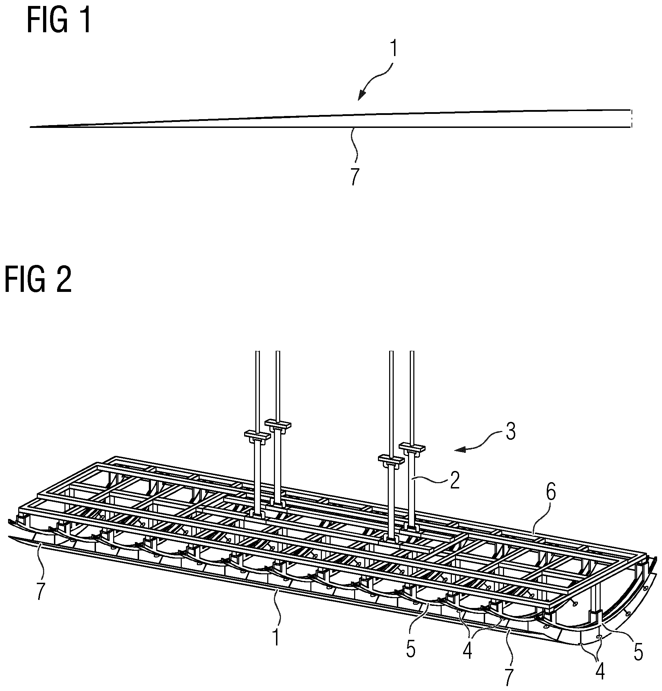

Fig. 1 shows a longitudinal cross section of a longitudinal end section of a preform element 1 for a wind turbine blade. As can be seen, the height decreases towards the longitudinal end, such that the end section 7 is tapered. Where the preform element 1 gets very thin, it is no longer sufficiently air-tight to be reliably gripped by suction cups (vacuum cups) of a first gripping means of a lifting device, or, alternatively, by Bernoulli grippers or vortex grippers.

Fig. 2 illustrates the carrying structure 2 of an auxiliary lifting device 3 which only has such a first gripping means, namely a vacuum suction arrangement comprising an array of suction cups 4 on crossmembers 5 and associated suction pumps (not shown). The crossmembers 5 are mounted to a frame 6. As can be seen, suction cups 4 also engage the preform element 1 in the tapered end section 7, where the preform element 1 is very thin. While the grip is reliable enough to move the preform element 1 from a preform mold (not shown) to an adjacent transport and/or storage rack, the preform element 1 may be lost during the more complicated movement of placing the preform element 1 in a blade mold.

Hence, in this disclosure, an improved lifting method using an improved main lifting device for lifting the preform element 1 from the transport and/or storage device into the blade mold is proposed, which uses flexible support sections sticking out from the lateral sides of the preform element 1, wherein two variants or options are proposed.

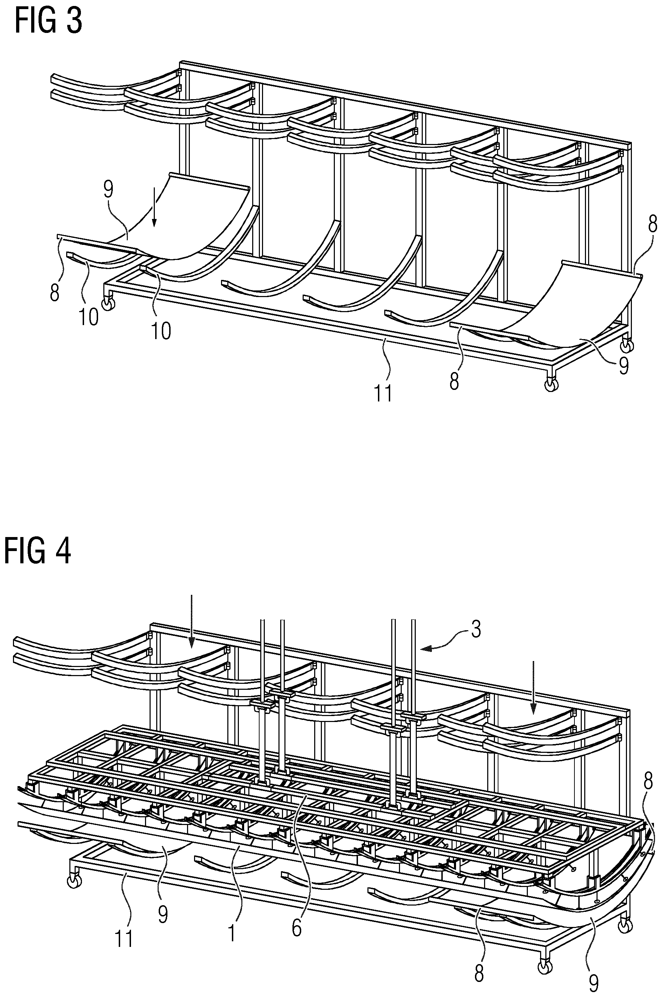

Figs. 3 to 5 illustrate an embodiment of the first such variant. Here, to provide the flexible support sections 8, in a first step, flexible support mats 9, in this case glass fiber mats, are placed on the support structure 10 of the transport and/or storage rack 11 at least where the tapered end sections 7 come to rest. The flexible support mats 9 are wider than the preform element 1.

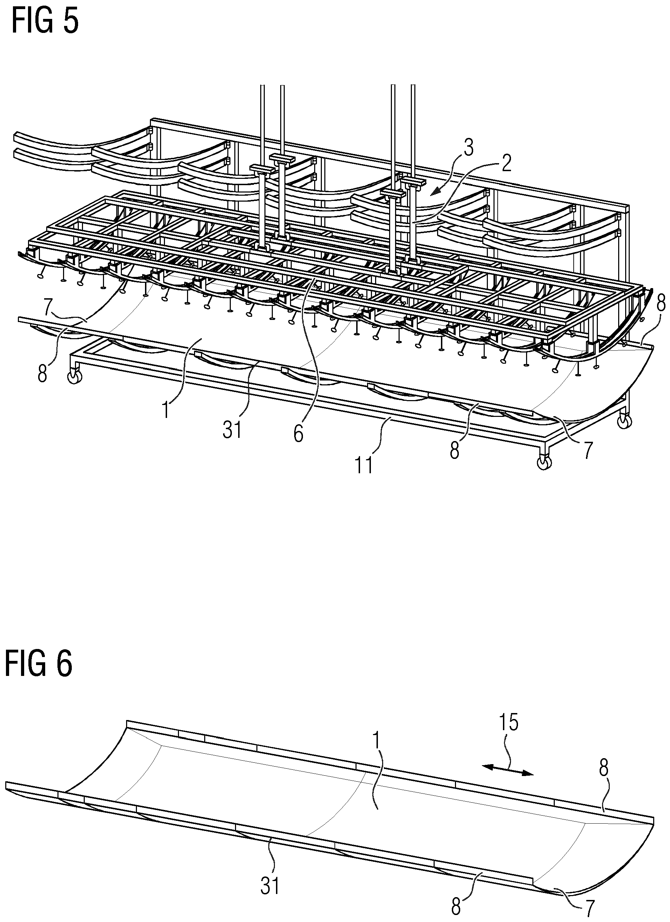

In a second step, as shown in Fig. 4, the preform element 1 is placed on the support structure 10 and hence the support mats 9 by the auxiliary lifting device 3, which can then be removed (Fig. 5). Since the support mats 9 are wider than the preform element 1, parts of them still jut out from under the preform element 1 from the lateral sides 31 in the tapered end sections 7, forming the flexible support sections 8.

In second variant, as shown in Fig. 6, the preform element 1 may already comprise the flexible support sections 8 as part of an extended component mat, which is wider than the other components of the preform element 1 and hence juts out on both lateral sides 31 of the preform element 1.

For both variants, to move the preform element 1 from the transport and/or storage device 11 to a blade mold in a reliable way without any overdesigned vacuum suction arrangement, in particular pumping power, a main lifting device is used which has a second gripping means for gripping the flexible support sections 8, in particular at least in the tapered end sections 7.

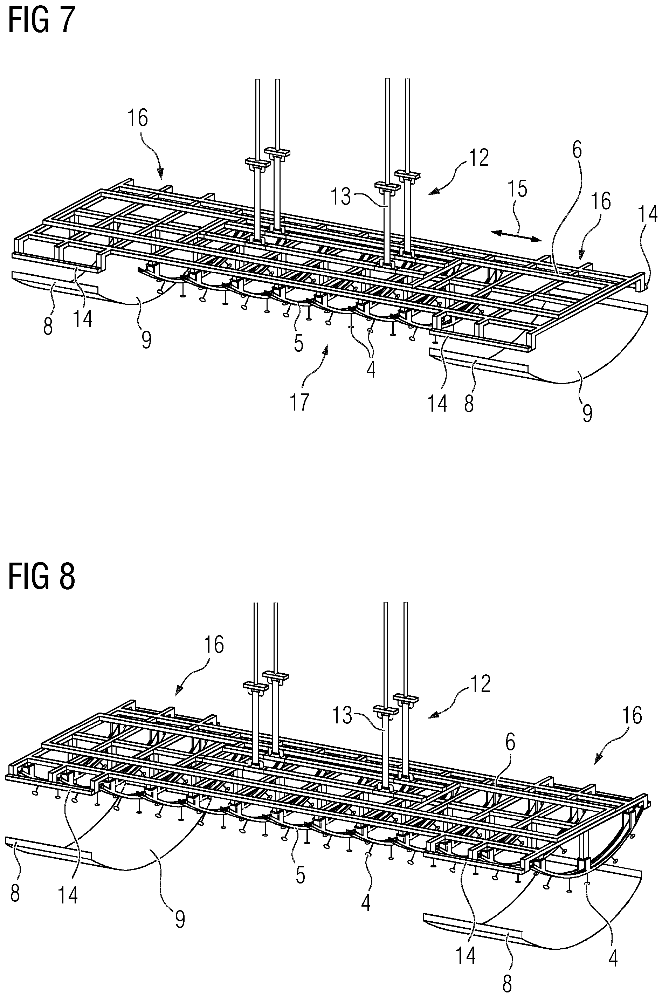

Figures 7 to 9 show embodiments of such a main lifting device 12. Each embodiment comprises the first gripping means already discussed, that is, a vacuum suction arrangement having suction cups 4 on cross members 5, which are mounted to a frame 6 of a carrying structure 13 of the main lifting device 12. The carrying structure 13 can be moved by a movement actuator (not shown) three-dimensionally, such that the preform element 1 can be accurately positioned in the blade mold.

In all three embodiments, carrier elements 14 of the second gripping means are mounted to the frame 6 extending in longitudinal direction 15 of the frame 6 and, hence, the preform element 1. Further, for each embodiment, support mats 9 are shown merely for illustrating the alignment of the support sections 8 with the carrier elements 14.

In the first embodiment of Fig. 7, in longitudinal end sections 16 of the frame 6, corresponding to the tapered end sections 7 of the preform element 1, only the second gripping means are provided, as indicated by the longitudinal carrier element 14, wherein the first gripping means are only provided in a central section 17 of the frame 6, as indicated by the suction cups 4, where no second gripping means are provided. Hence, no ineffective use of suction cups 4 at the low heights, where the preform element 1 is not sufficiently air-tight, is possible and the first gripping means can be designed smaller.

In the second embodiment of Fig. 8, second gripping means are also only provided in the longitudinal end sections 16, while first gripping means are provided over the whole length of the frame 6 and hence the carrying structure. In use, when lifting preform elements 1 having tapered end sections 7, suction cups 4 in the longitudinal end sections 16 of the carrying structure 13 may be deactivated. However, on the other hand, they may be used for, for example, non-tapered preform elements. To this end, the main lifting device 12 may comprise a control device (not shown) to selectively operate a respective part of the first gripping means (and, optionally, also the second gripping means).

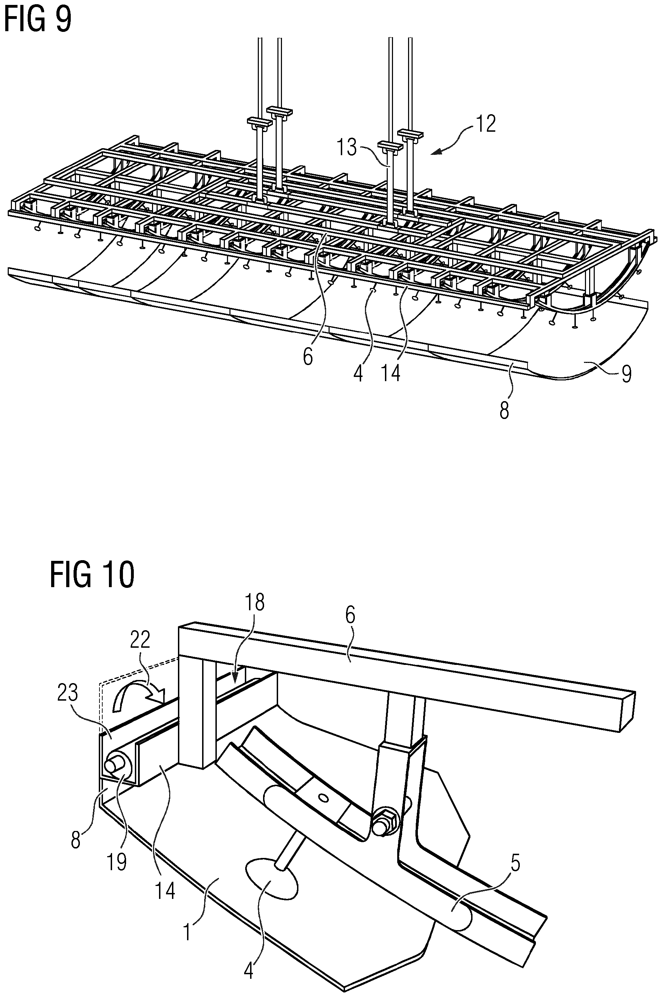

As shown in the third embodiment of Fig. 9, both the first gripping means and the second gripping means may extend over the whole length of the frame 6 and hence the carrying structure 13, providing the highest flexibility since support sections 8 as well as the upper surface of the preform element 1 can be gripped over the whole length. Here, also, a corresponding control device may be provided.

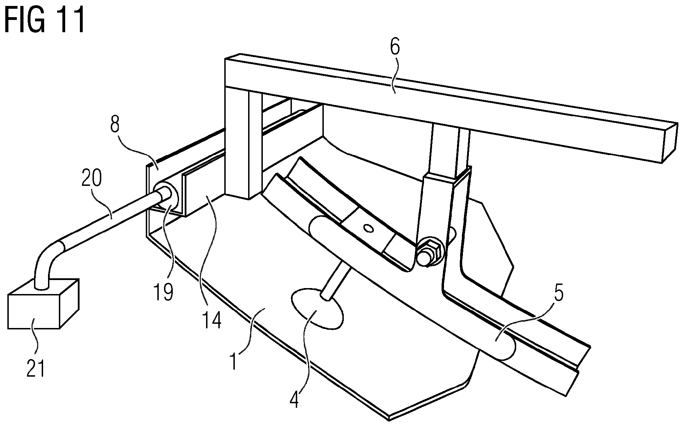

Fig. 10 shows both embodiments of steps of the lifting method to grip the support portions 8 in a clamping process as well as of a concrete construction of the second gripping means. The carrier element 14 has a U-shaped cross-section, wherein the U is open to the upper side and defines, by its interior, a receiving volume 18 for the flexible support sections 8. An expandable hose 19 runs longitudinally through the whole receiving volume 18. The expandable hose 19 is connected via supply hose 20 to a fluid supply 21, as shown in Fig. 11.

To grip the flexible support section 8, the flexible support section 8 is flipped around the carrier element 14 to be introduced into the receiving volume 19, as indicated by arrow 22 of fig. 10. In particular, the flexible support section 8 is folded to lie against clamping surface 23 formed by the inner wall of the outer leg of the U-shape.

In a following step, the expandable hose 19 is filled with fluid, in this case air, from the fluid supply 21 acting with the hoses 19, 20 as a pneumatic actuator, such that the expandable hose 19 expands, as shown in Fig. 11, and presses the part of the support section 8 which was turned over into the receiving volume 18 against the clamping surface 23, firmly holding it in position. The hose 19 hence acts as a clamping element. To improve the grip of this clamping arrangement, the clamping surface 23 may be modified to improve friction and/or comprise unevenness as surface structure.

It is noted that, as an alternative to the embodiment of Figures 10 and 11, the clamping may also be affected by using a mechanical actuator.

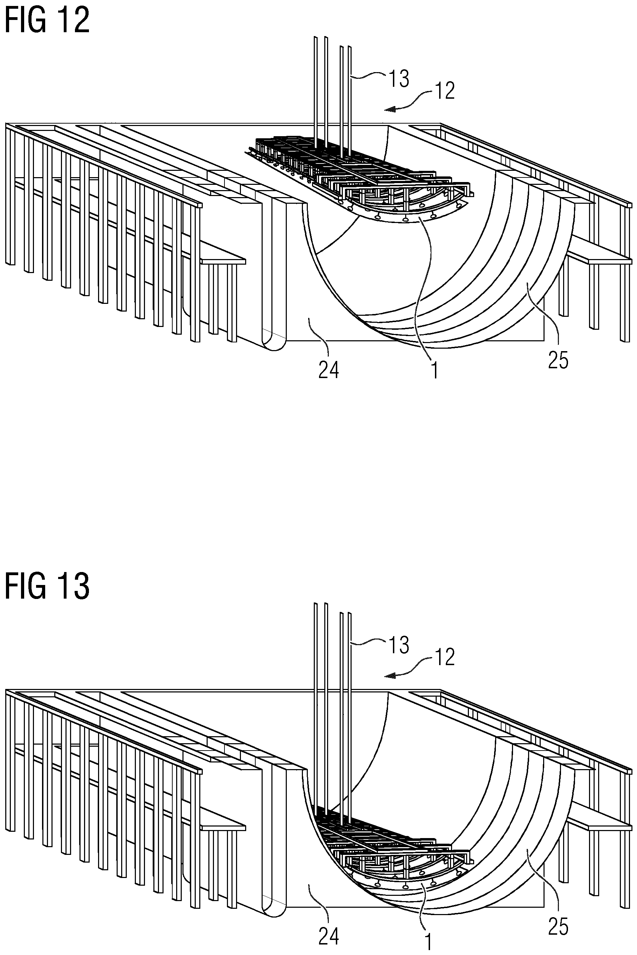

Once the preform element 1 has been firmly gripped by using both the first gripping means acting onto the upper surface of the preform element 1 and the second gripping means acting onto the support sections 8, as shown above. The preform element 1 is lifted from the transport and/or storage rack 11 by the main lifting device 12 and moved into the blade mold 24, as shown in fig. 12. Other blade material 25, in particular dry mats, has already been placed inside the blade mold 24. As shown in Fig. 13, the preform element 1 is lowered onto the other blade material 25. The preform element 1 can now be freed from the gripping means by emptying the expanded hose 19, for example by opening respective valves, and deactivating the pumps of the suction cups 4.

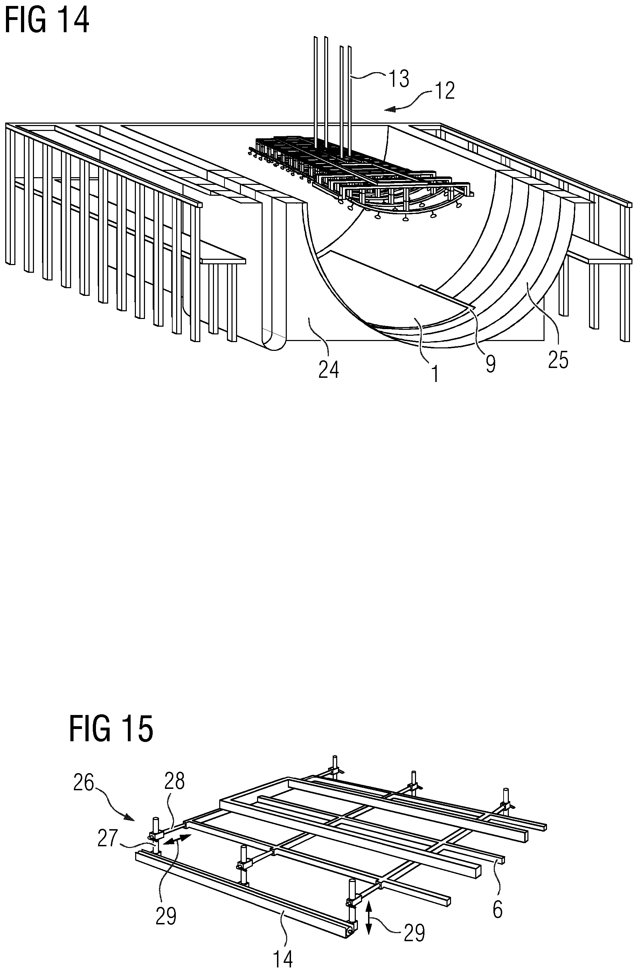

As shown in fig. 14, the carrying structure 13 can now be lifted again such that the preform element 1 remains in the blade mold 24. If support mats 9 were used, they also remain in the blade mold 24 to become part of the wind turbine blade.

The main lifting device 12 can now, for example, be used to move another preform element 1 into the blade mold 24.

If preform elements 1 of different shape and/or size are used, the second gripping means may also have adaptation means 26 associated with them, as shown in Fig. 15. Here, the carrier elements 14 may be coupled to the frame 6 by vertical connection elements 27 and horizontal connection elements 28, whose effective lengths may be adjustable by the adaptation means 26, as indicated by arrows 29. In this exemplary embodiment, the horizontal connection elements 28 are telescopic, while the vertical connection elements 27 are guided in a releasable mounting means 30 such that the vertical connection element 28 can be fastened providing different effective connection lengths. Of course, other concrete embodiments of the adaptation means 26 are also conceivable, for example comprising linear guides, motors and the like.

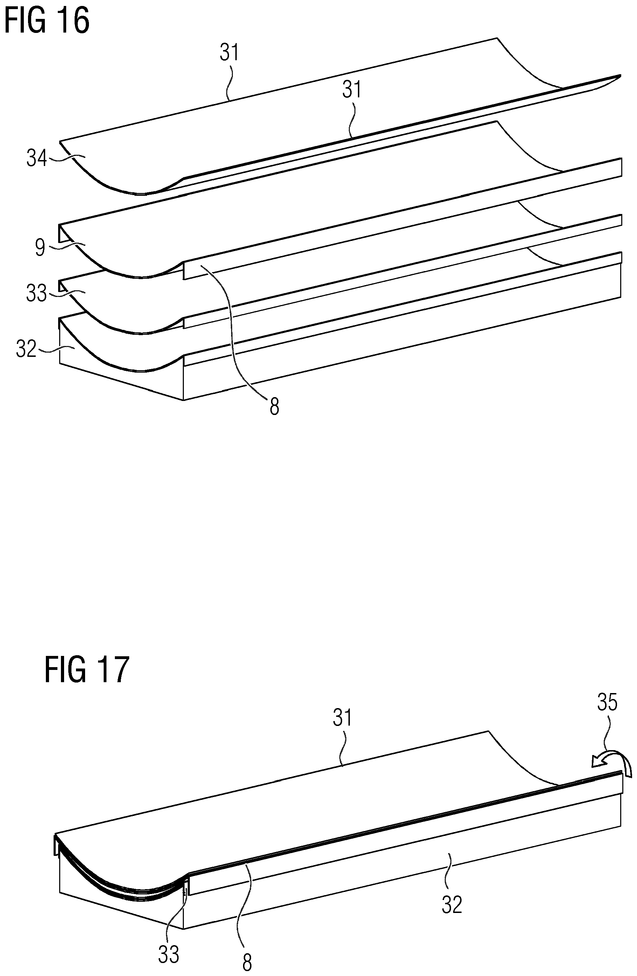

As an alternative to the steps shown in Figs. 3 to 5, as shown in Figs. 16 and 17, in another embodiment of the first variant, the flexible support mat 9 may be added during the manufacturing process of the preform element 1 in a preform mold 32. As can be seen, first, as in principle known, the lower vacuum foil 33 for forming a vacuum bag is added. Thereafter, instead of directly placing the components 34 of the preform element 1, the flexible support mat 9 is positioned in the preform mold 32 without any binder on it, so that it does not attach to the components 34 when the preform element layers are arranged as in principle known in the art. In the components 34, binder is used as usual.

After the components 34 forming the preform element 1 have been placed, as shown in Fig. 17, the support sections 8 of the support mat 9 stick out from under the preform element 1 on the lateral sides 31. As indicated by arrow 35, for packing the preform element 1 in the support bag, the support sections 8 may be simply flipped in onto the upper surface of the preform element 1. After this, the upper vacuum foil (not shown) can be added and further steps in principle known in the art, for example heat treatment, may be applied to finish the preform element 1 and have it packed, together with the support mat 9, into a vacuum bag.

Once the preform element 1 is to be lifted as discussed above, the vacuum bag is removed and the support sections 8 can be flipped out again for the second gripping means to grip them.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for lifting a preform element (1) for a wind turbine blade of a wind turbine, in particular from a transport and/or storage device for at least one preform element (1) to a blade mold (24), comprising
- providing a main lifting device (12) having first gripping means, in particular suction cups (4) connected to at least one pump, and second gripping means,
- attaching the first gripping means to an upper surface of the preform element (1),
- gripping flexible support sections (8) extending at opposing lateral sides (31) of the preform element (1) by the second gripping means, and
- lifting the gripped preform element (1) using the main lifting device (12).

2. Method according to claim 1, **characterized in that** the preform element (1) has tapered end sections (7), wherein the support sections (8) are provided at least spanning the tapered end sections (7).

3. Method according to claim 2, **characterized in that** the main lifting device (12) comprises no first gripping means for at least a part of the tapered end sections (7) and/or first gripping means are deactivated for at least the part of the tapered end sections (7).

4. Method according to one of the preceding claims, **characterized in that** the method further comprises, before applying the gripping means,
- positioning at least one flexible support mat (9) below the preform element (1) to be lifted, such that the support sections (8) of the support mat (9) stick out from both lateral sides (31) of the preform element (1), or
- providing the preform element (1) and at least one flexible support mat (9) together in a vacuum bag, wherein the preform element (1) is positioned on the at least one support mat (9) such that the support sections (8) of the support mat (9) stick out from under the preform element (1) on both lateral sides (31) of the preform element (1).

5. Method according to claim 4, **characterized in that** the support mat (9) is a fiber mat, in particular a glass fiber mat, and/or the support mat (9) is left in the blade mold (24) to become a part of the wind turbine blade.

6. Method according to claim 4 or 5, **characterized in that**
- the positioning comprises
- laying out the at least one support mat (9) in the transport and/or storage device adjacent a preform mold (32),
- lifting, by an auxiliary lifting device (3) having or using only first gripping means, the preform element (1) from the preform mold (32) onto the at least one support mat (9) on the transport and/or storage device, or
- the providing comprises
- providing, in a preform mold (32), a lower vacuum foil (33) and the flexible support mat (9) on top of the vacuum foil (33), wherein no binding agent is used on the support mat (9),
- manufacturing the preform element (1) on the flexible support mat (9) in the preform mold (32),
- folding the support sections (8) of the support mat (9) onto the preform element (1)
- closing the vacuum bag by providing an upper vacuum foil,
- when the preform element (1) is to be lifted, removing the vacuum bag and folding the support sections (8) back out from the upper surface of the preform element (1).

7. Method according to one of the preceding claims, **characterized in that** the support sections (8) are at least partly provided by at least one extended component mat of the preform element (1), which is wider than the preform element (1) and hence protrudes from the preform element (1) on both lateral sides (31).

8. Method according to one of the preceding claims, **characterized in that** gripping the support sections (8) by the second gripping means comprises
- flipping the support sections (8) around a longitudinal carrier element (14) of the second gripping means and placing at least a part of each support section (8) in a respective receiving volume (18) of the carrier element (14), and
- clamping the support section (8) against at least one clamping surface (23) using a clamping element of the second gripping means.

9. Method according to claim 8, **characterized in that** the clamping process is effected by at least one mechanical and/or hydraulic and/or pneumatic actuator of the second gripping means.

10. Method according to claim 9, **characterized in that** the hydraulic and/or pneumatic actuator comprises, as the clamping element, at least one expandable hose (19) extending in longitudinal direction through the receiving volume (18), wherein the expandable hose (19) is filled with at least one fluid to effect the clamping.

11. Method according to one of the preceding claims, **characterized in that** the main lifting device (12) comprises adaptation means (26) for adapting the second gripping means to a width and/or a shape and/or a height of the preform element (1), wherein the method further comprises adapting the second gripping means to a width and/or a shape and/or a height of the preform element (1) before gripping the support sections (8).

12. Lifting device (12) for a preform element (1) of a wind turbine blade, in particular for use as the main lifting device (12) in a method according to one of the preceding claims, comprising
- a carrying structure (13) having
- first gripping means, in particular suction cups (4) connected to at least one pump, for attaching to an upper surface of the preform element (1), and
- second gripping means for gripping flexible support sections (8) extending at opposing lateral sides (31) of the preform element (1), which extend at least partly along lateral sides of the carrying structure (13); and
- a movement actuator for moving the carrying structure (13).

13. Lifting device according to claim 12, **characterized in that** the second gripping means comprises
- longitudinal carrier elements (14) having a receiving volume (18) for a support section (8), and
- a clamping element for clamping the support section (8) against at least one clamping surface (23) of the receiving volume (18).

14. Lifting device according to claim 13, **characterized in that** the second gripping means further comprises a hydraulic and/or pneumatic actuator comprising, for each carrier element (14),
- as the clamping element, at least one expandable hose (19) extending in longitudinal direction through the receiving volume (18),
- a fluid source (21) for filling the expandable hose (19) with at least one fluid to effect the clamping.

15. Lifting device according to one of the claims 12 to 14, **characterized in that** it further comprises adaptation means (26) for adapting the second gripping means to a width and/or a shape and/or a height of the preform element (1), and/or **in that** the carrying structure (13) comprises no first gripping means in at least one longitudinal end section (16) for attaching to a tapered end section (7) of the preform element (1) .
